# EUROPÄISCHE PATENTSCHRIFT

(11) **EP 2 783 919 B1**
(45) Veröffentlichungstag und Bekanntmachung des Hinweises auf die Patenterteilung: **27.04.2016**
(21) Anmeldenummer: 13004499.3
(22) Anmeldetag: 14.09.2013
(51) Int. Cl.: B60R 9/058

(54) **Vorrichtung zum Befestigen einer Dachbox**
Device for fixing a roof box
Dispositif de fixation d'un coffre de toit

(30) Priorität: 25.03.2013 DE 102013005036
(43) Veröffentlichungstag der Anmeldung: 01.10.2014
(73) Patentinhaber: Kamei GmbH & Co. KG., 38448 Wolfsburg (DE); KAMEI Grundstücksverwaltungs GmbH & Co. KG, 38448 Wolfsburg (DE)
(72) Erfinder: Wäke, Arno, 38471 Rühen (DE)
(74) Vertreter: Rehmann, Thorsten

(56) Entgegenhaltungen:
- EP-A2- 0 945 307
- DE-A1- 19 853 321
- DE-A1-102006 005 163
- FR-A1- 2 721 377
- US-A- 5 826 765

## Beschreibung

Die Erfindung betrifft eine Vorrichtung zum Befestigen einer Dachbox auf einem Querträger eines Fahrzeugdachs, wobei der Querträger mit einer in Richtung der Dachbox offenen Rechtecknut mit zwei Hinterschnitten versehen ist.

Üblicherweise werden zwei derartige Querträger als Grundträger bezeichnet und mit der Reling auf einem Fahrzeugdach oder auch direkt damit verbunden. Zur Befestigung der Dachbox werden in die Rechtecknuten der beiden Querträger Kulissensteine eingeführt, die einen nach oben ragenden Gewindebolzen aufweisen. Die Dachbox ist in ihrem Bodenteil mit vier Löchern versehen, durch die die Gewindebolzen hindurchtreten und dann im Inneren der Dachbox verschraubt werden. Die Montage der Dachbox auf den Grundträger ist recht mühsam.

US5826765 offenbart eine Vorrichtung zum Befestigen einer Dachbox auf einem Querträger eines Fahrzeugdaches, wobei der Querträger mit einer in Richtung der Dachbox offenen Rechtecknut mit zwei Hinterschnitten versehen ist, mit:
- eine U-förmig gebogene Klammer mit einem geschlossenen Kopf und zwei dem Kopf gegenüberliegenden Schenkeln, deren freie Enden voneinander wegweisend abgewinkelt sind,
- einen zwischen den Schenkeln angeordneten Keil zum Aufspreizen der beiden Enden der Schenkel, wobei
die Klammer sich in Richtung des Gehäuses bewegt und ihre Schenkel dabei am Keil aufgespreizt werden, bis deren abgewinkelte Enden mit den Hinterschnitten der Rechtecknut klemmend in Eingriff kommen.

Aus der DE 88 13 796 U1 ist ein Fahrzeugdachträger bekannt, bei dem ein Fahrradträger mittels einer Schnellspannvorrichtung mit den Querträgern verbunden werden kann. Hierzu sind die Kulissensteine mit einem Bolzen versehen, an deren freien Enden ein von einer Offenstellung in eine Geschlossenstellung verschwenkbarer Hebel vorgesehen ist. Durch Verschwenken des Hebels in die Geschlossenstellung wird der Kulissenstein (wie bei der Verschraubung auch) gegen die Hinterschneidungen in der Rechtecknut gezogen. Für die Verwendung mit einer Dachbox ist diese Schnellspannvorrichtung nicht geeignet, weil der Hebel von dem Bolzen gelöst werden muss, damit die Bolzen in die Löcher im Boden der Dachbox eingeführt werden können. Nachdem dies erfolgt ist, müssen die Bügel dann wieder mit dem Bolzen verbunden werden. Eine derartige Vorgehensweise wäre genauso umständlich wie das Befestigen der Dachbox durch Verschrauben.

Von dieser Problemstellung ausgehend soll eine Vorrichtung angegeben werden, mit der das Befestigen der Dachbox auf den Querträgern vereinfacht wird.

Zur Problemlösung zeichnet sich eine gattungsgemäße Vorrichtung durch folgende Merkmale aus:
a) ein Gehäuse mit einer Druckplatte,
b) einen im Gehäuse von einer Offenstellung in eine Geschlossenstellung verschwenkbar angeordneten Klemmhebel,
c) eine U-förmig gebogene Klammer mit einem geschlossenen Kopf und zwei dem Kopf gegenüber liegenden Schenkeln, deren freie Enden voneinander wegweisend abgewinkelt sind,
d) einen zwischen den Schenkeln angeordneten Keil zum Aufspreizen der beiden Enden der Schenkel,
   wobei
e) der Klemmhebel über einen Exzenter so mit der Klammer in Verbindung steht, dass bei einer Schwenkbewegung des Klemmhebels von der Offenstellung in die Geschlossenstellung die Klammer sich in Richtung des Gehäuses bewegt und ihre Schenkel dabei am Keil aufgespreizt werden, bis deren abgewinkelte Enden mit den Hinterschnitten der Rechtecknut klemmend in Eingriff kommen.

Durch diese Ausgestaltung können die beiden Schenkel der Klammer von oben in die Rechtecknut eingeführt werden. Beim Verschwenken des Klemmbügels in die Geschlossenstellung werden die freien Enden der Schenkel auseinandergespreizt und greifen dann hinter die Hinterschneidung. Durch eine weitere Bewegung des Klemmhebels wird die Klammer abschließend in vertikaler Richtung angezogen und die umgebogenen Enden der Schenkel klemmen hinter den Hinterschnitten der Rechtecknut fest. Die Dachbox ist dann mit dem Grundträger fest verbunden.

Vier solcher Vorrichtungen sind üblicherweise in einer Dachbox vorgesehen. In der Dachbox sind anstatt einfacher Bohrungen vorzugsweise Längsschlitze vorgesehen, sodass die Befestigungsvorrichtung in Längsrichtung der Dachbox verschiebbar ist, um die universelle Einsetzbarkeit für unterschiedlich beabstandete Querträger, was von dem jeweiligen Fahrzeugmodell abhängt, zu gewährleisten.

Der Keil ist vorzugsweise mit einem Druckstück verschraubt, und zwischen dem Keil und dem Druckstück ist insbesondere vorzugsweise eine Druckfeder angeordnet. Zur Herstellung der Exzentrizität ist der Klemmhebel vorzugsweise exzentrisch im Gehäuse gelagert.

Zur Verhinderung eines unbeabsichtigten Öffnens kann der Klemmhebel in der Geschlossenstellung verriegelbar sein. Hierzu kann eine Verrastung im Gehäuse vorgesehen sein, in die der Hebel hineingedrückt wird.

Um das Einführen der Klammer in die Rechtecknut des Querträgers zu erleichtern, können die Schenkel der Klammer in der Offenstellung zumindest im Bereich ihrer freien Enden sich kreuzend angeordnet sein.

Bis auf die Klammer kann die Vorrichtung aus Kunststoff bestehen. Die Klammer besteht vorzugsweise aus Federstahl.

Zum Ausgleich unterschiedlicher Breiten der Rechtecknut im Querträger ist es vorteilhaft, wenn der Keil eine kurze Bewegung ausführen kann. Die zwischen dem Druckstück und dem Keil angeordnete Druckfeder wird dann entsprechend weiter vorgespannt (zusammengedrückt).

Die Dachbox ist zwischen dem Gehäuseteil und einem Druckklotz, der über Rastelemente mit dem Gehäuseteil verbunden werden kann, angeordnet. Um die Montage der Dachbox auf dem Querträger zu erleichtern sind in dem ein Gehäuseteil bildenden Druckklotz mindestens zwei Stege vorgesehen, die einen sich in Richtung der Unterseite des Gehäuses verjüngenden Spalt ausbilden. Die Stege können gegenüberliegend zueinander versetzt angeordnet sein. Durch den sich verjüngenden Spalt werden die Schenkel der Klammer aufeinander zu bewegt und geführt. Dadurch ist sichergestellt, dass sich die freien Enden der Schenkel kreuzen und einfach in die Rechtecknut im Querträger eingeführt werden können.

Um die Montage der Dachbox weiter zu erleichtern ist vorzugsweise oberhalb der Klammer ein Niederhalter angeordnet, der in der Offenstellung des Klemmhebels ein Aufspreizen der Klammer verhindert. Mit dieser Ausgestaltung wird erreicht, dass die Klammer immer in der Stellung bleibt, in der sie einfach in die Rechtecknut des Querträgers eingesetzt werden kann. Unbeabsichtigtes Aufspreizen der Schenkel, was beispielsweise dadurch geschehen könnte, dass die Dachbox beim Aufsetzen etwas verkantet wird, die Klammer dann einseitig an der Öffnung der Rechtecknut des Querträgers hängen bleibt, und die Aufspreizbewegung dadurch dann eingeleitet wird, dass eine Kraft in Richtung des Keiles wirkt, ist dadurch wirksam ausgeschlossen.

Vorzugsweise liegt der Niederhalter in der Offenstellung des Klemmhebels auf dem Kopf der Klammer auf. Hierzu kann der Niederhalter eine der Kontur des Kopfs angepasste Ausnehmung aufweisen, sodass eine formschlüssige Verbindung zwischen Niederhalter und Klammer hergestellt wird.

Der Niederhalter ist vorzugsweise am Klemmhebel angeordnet und insbesondere in einem im Klemmhebel vorgesehenen Langloch mittels eines Bolzens geführt.

Mit Hilfe einer Zeichnung sollen Ausführungsbeispiele der Erfindung nachfolgend näher beschrieben werden.

Es zeigen:

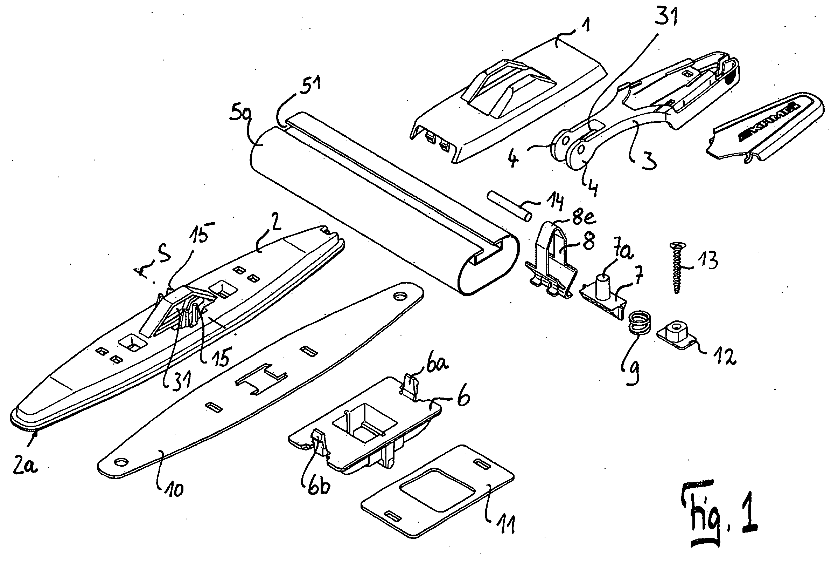

- Figur 1 -: eine erste Ausführungsform der Vorrichtung und einen Teil des Querträgers in Explosionsdarstellung,
- Figur 2 -: eine schematische Schnittdarstellung der Vorrichtung nach Figur 1 in Offenstellung,
- Figur 3 -: die Darstellung nach Figur 2 in einer Zwischenstellung,
- Figur 4 -: die Darstellung nach Figur 2 in der Geschlossenstellung, mit einer breiten Rechtecknut im Querträger,
- Figur 5 -: eine der Figur 4 entsprechende Darstellung mit einer schmalen Rechtecknut im Querträger,

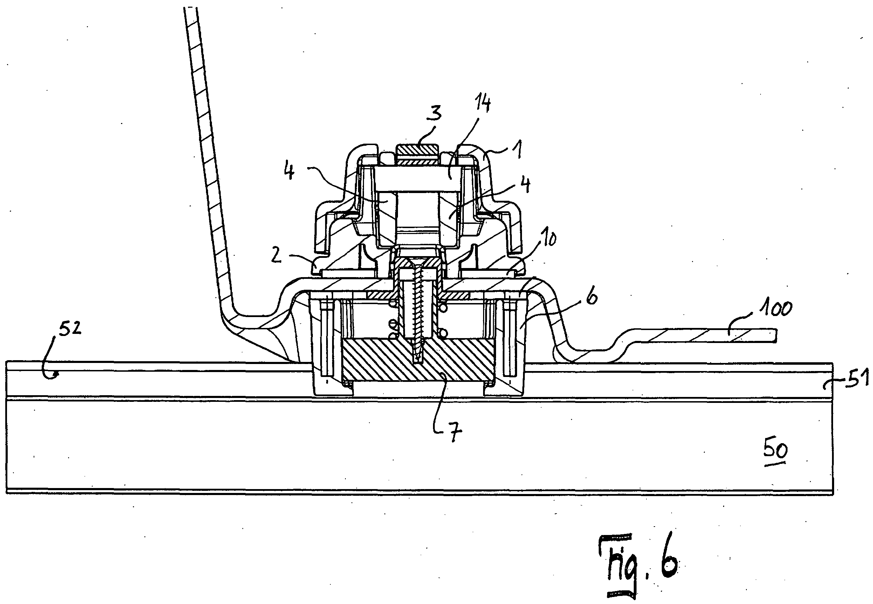

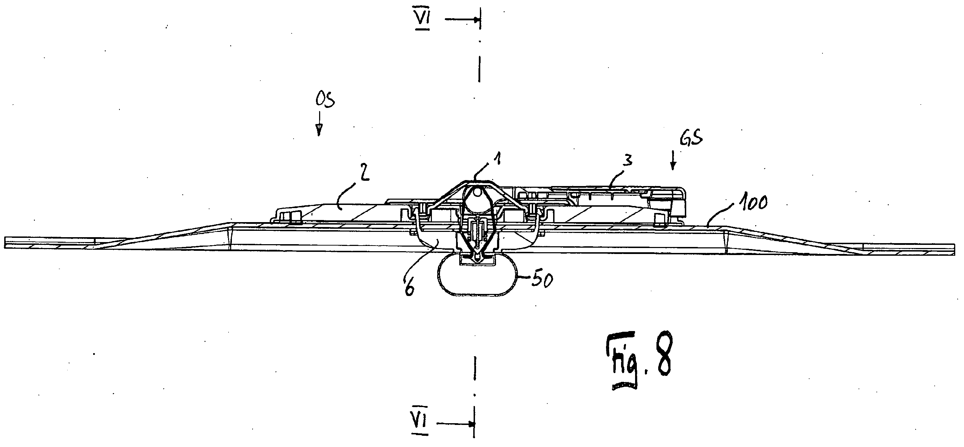

- Figur 6 -: den Schnitt entlang der Linie VI-VI nach Figur 8,

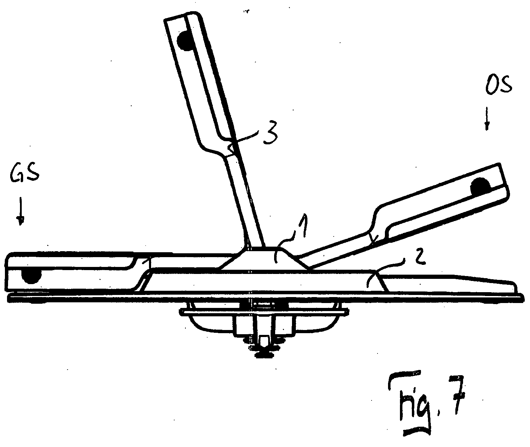

- Figur 7 -: die schematische Ansicht der Vorrichtung,
- Figur 8 -: die Vorrichtung nach Figur 1 im Längsschnitt,
- Figur 9 -: eine zweite Ausführungsform der Vorrichtung und einen Teil des Querträgers in Explosionsdarstellung,
- Figur 10 -: eine schematische Schnittdarstellung der Vorrichtung nach Figur 9 in Offenstellung,
- Figur 11 -: die Darstellung nach Figur 10 in einer Zwischenstellung,
- Figur 12 -: die Darstellung nach Figur 2 in der Geschlossenstellung.

Die Vorrichtung besteht aus dem mehrteiligen Gehäuse 1, 2, 6 das über eine an dem Gehäuseteil 2 ausgebildete Druckplatte 2a im Inneren der Dachbox 100 aufliegt. Im Gehäuseteil 2 ist der Klemmhebel 3 um die Schwenkachse S an einem Bolzen 14 gelagert. Beidseitig zu dem Klemmhebel 3 sind zwei koaxiale Exzenterscheiben 4 vorgesehen. Zwischen der Druckplatte 2a und dem Boden der Dachbox 100 ist eine Dichtung 10 eingelegt. Außerhalb der Dachbox 100 ist unterhalb des Gehäuseteils 2 ein Druckklotz 6 vorgesehen, der an der Dachbox 100 über eine Dichtung 11 anliegt und mit dem Gehäuseteil 2 über Rastelemente 6a, 6b verbunden ist. Im Gehäuseteil 2 ist in einer Ausnehmung 31 im Klemmhebel 3 die U-förmig gebogene Klammer 8 vorgesehen. Die beiden freien Enden 8a, 8b der Klammer 8 sind rechtwinkelig voneinander wegweisend umgebogen. Zwischen den Schenkeln 8c, 8d der Klammer 8 ist ein Keil 7 angeordnet, der über die Schraube 13 mit einer Druckplatte 12 verschraubt ist. Um den Zapfen 7a des Keils 7 herum ist eine Druckfeder 9 angeordnet. Die Klammer 8 ist mit ihrem Kopf 8e um die Achse 14, mit der der Klemmhebel 3 um die Schwenkachse S im Gehäuse 2 gelagert ist, herumgelegt. Die Achse 14 wird in zwei am Gehäuseteil 2 ausgebildeten Gabeln 15 aufgenommen und ist in den Gabeln 15 verschiebbar. Die Schwenkachse S verändert ihre relative Höhenlage im Gehäuseteil 2 bzw. in den Gabeln 15.

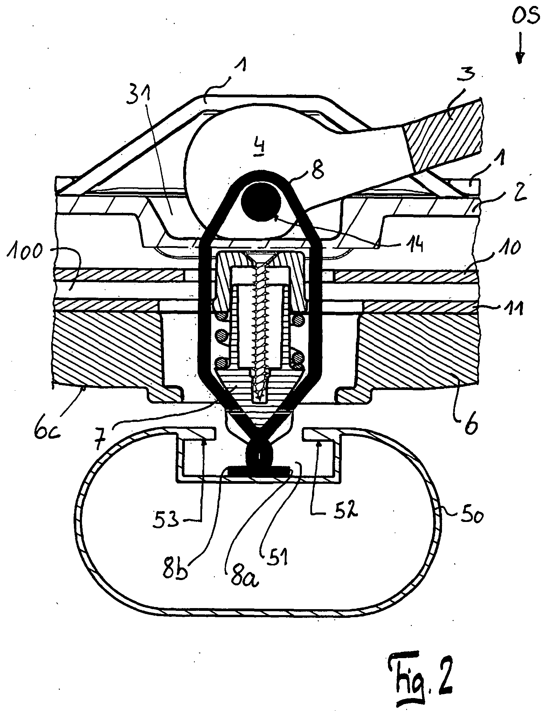

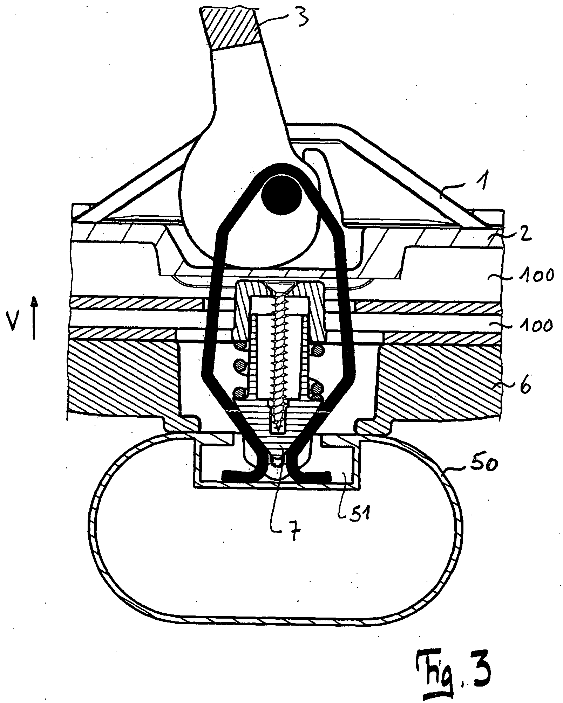

Mit Hilfe der Figuren 2 bis 4, die eine schematische Darstellung der Vorrichtung im Schnitt zeigen, soll die Funktionsweise beschrieben werden.

In der geöffneten Stellung OS des Klemmhebels 3 kreuzen sich die freien Enden 8a, 8b der Schenkel 8c, 8d der Klammer 8. Dadurch wird eine minimale Ausdehnung erzielt, sodass die umgebogenen Enden 8a, 8b in die Öffnung der Rechtecknut 51 des Querträgers 50 eingesetzt werden können (vgl. Figur 2).

Wird der Klemmhebel 3 nun in Richtung der Geschlossenstellung GS verschwenkt, drücken die Exzenterscheiben 4 sich auf dem Gehäuseteil 2 ab. Gleichzeitig wandert die Achse 14 in den Gabeln 15 nach oben und zieht die Klammer 3 nach oben in Richtung V. Dabei werden die Schenkel 8a, 8b über den Keil 7 gezogen und von diesem aufgespreizt. Der an der Unterseite der Dachbox 100 anliegende Druckklotz 6 liegt dabei auf dem Querträger 50 auf. Beim weiteren Verschwenken des Klemmhebels 3 in die Geschlossenstellung GS spreizen sich die Schenkel 8c, 8d am Keil 7 weiter auf und die Klammer 8 wird weiter nach oben gezogen, bis die umgebogenen Enden 8a, 8b an den Hinterschnitten 52, 53 der Rechtecknut 51 angreifen und die Dachbox 100 gegen den Querträger 50 verspannen.

Wird der Klemmhebel 3 von der Geschlossenstellung GS wieder zurück bewegt in Richtung der Offenstellung OS, rutscht die Klammer 8 aufgrund der ihr durch die aufgespreizten Schenkel 8c, 8d inhärenten Federkraft nach unten, bis sich die freien Enden 8a, 8b wieder kreuzen und die Vorrichtung aus der Rechtecknut 51 des Querträgers 50 herausgenommen werden kann. Die Klammer 8 besteht aus Federstahl, die übrigen Teile können aus Kunststoff bestehen.

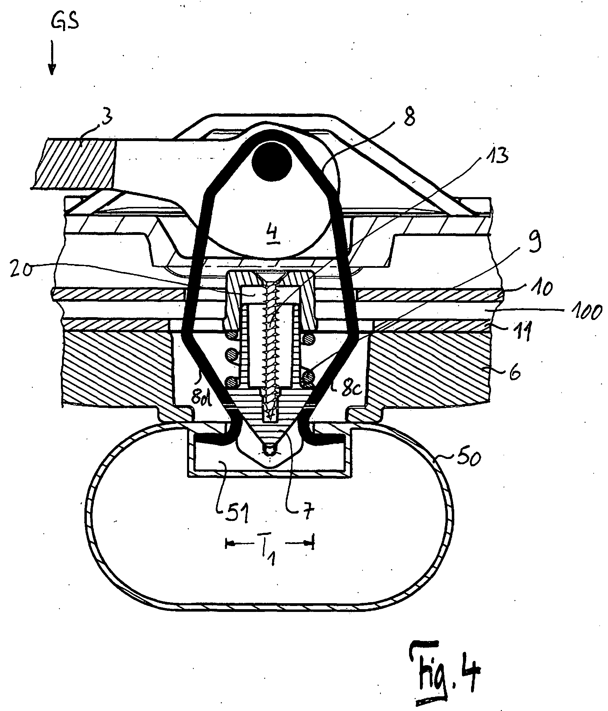

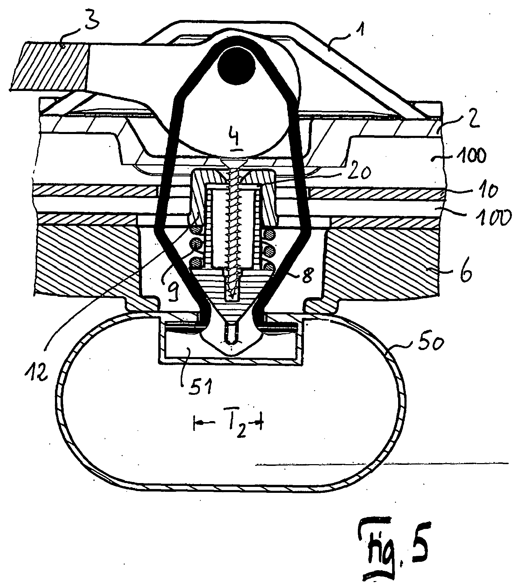

Die Rechtecknuten 51 im Querträger 50 können unterschiedliche Breiten T₁, T₂ aufweisen. Um diese unterschiedlichen Breiten T₁, T₂ ausgleichen zu können, ist zwischen dem Druckstück 12 und dem Keil 7 eine Druckfeder 9 vorgesehen. Diese Druckfeder 9 stellt einen Spalt 20 zwischen dem oberen Ende des Zapfens 7a am Keil 7 und dem Druckstück 12 ein. Wie ein Vergleich der Figuren 4 und 5 zeigt, ist dieser Spalt 20 verkleinerbar, wenn eine geringere Breite T₂. der Rechtecknut 51 vorliegt. Das Druckstück 12 wird dann gegen die Druckfeder 9 gespannt, sodass sich die unterschiedlichen Breiten T₁, T₂ ausgleichen.

Der Keil 7 drückt durch die Kraft der Druckfeder 9 die Klammer 8 immer bis zum Anschlag, der sich durch die Hinterschneidungen 52, 53 bzw. die Breiten T₁, T₂ die sich im Eingang der Rechtecknut 51 einstellt. Bei einer kleinen Breite T₂ ist der Keil 7 in seiner obersten Position. Die Druckfeder 9 ist fast auf Blocklänge zusammengedrückt. Bei einer Rechtecknut 51 mit größerer Breite T₁ ist der Keil 7 in seiner untersten Position. Die Druckfeder 9 ist fast entspannt.

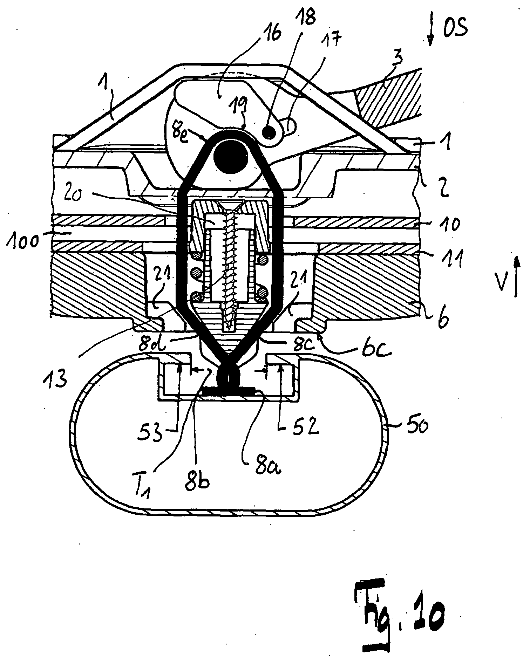

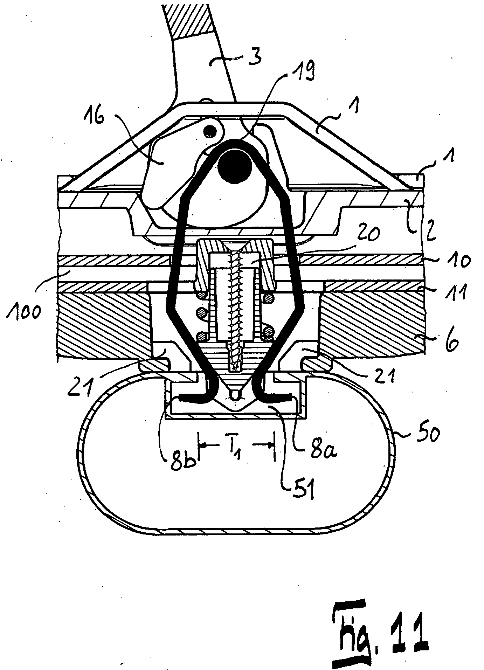

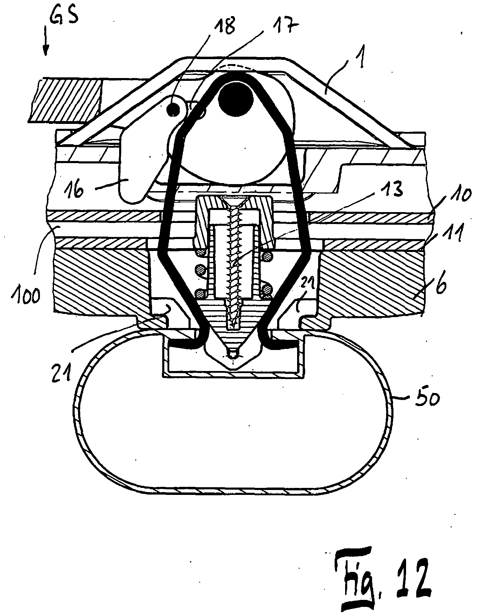

Bei dem in den Figuren 10 bis 12 dargestellten Ausführungsbeispiel der Vorrichtung ist am Klemmhebel 3 ein Niederhalter 16 angeordnet, der in der Offenstellung OS des Klemmhebels 3 auf dem Kopf 8e der Klammer 8 aufliegt und damit eine Bewegungsmöglichkeit der Klammer 8 verhindert, sodass ein Aufspreizen der Schenkel 8c, 8d ausgeschlossen ist. Der Niederhalter 16 ist über einen Bolzen 18 in einem im Klemmhebel 3 vorgesehenen Langloch 17 gleitend geführt, sodass er, wenn der Klemmhebel 3 von seiner Offenstellung OS (Figur 10) in seine Geschlossenstellung GS (Figur 12) geschwenkt wird, der sich bezogen auf den Querträger 50 nach oben (Richtung V) bewegenden Klammer 8 ausweichen kann. Im Niederhalter 16 ist eine Ausnehmung 19 vorgesehen, die der Kontur des Kopfs 8e der Klammer 8 angepasst ist. Dadurch liegt der Niederhalter 16 formschlüssig auf dem Kopf 8e der Klammer 8 auf, wenn der Klemmhebel 3 in seiner Offenstellung OS ist.

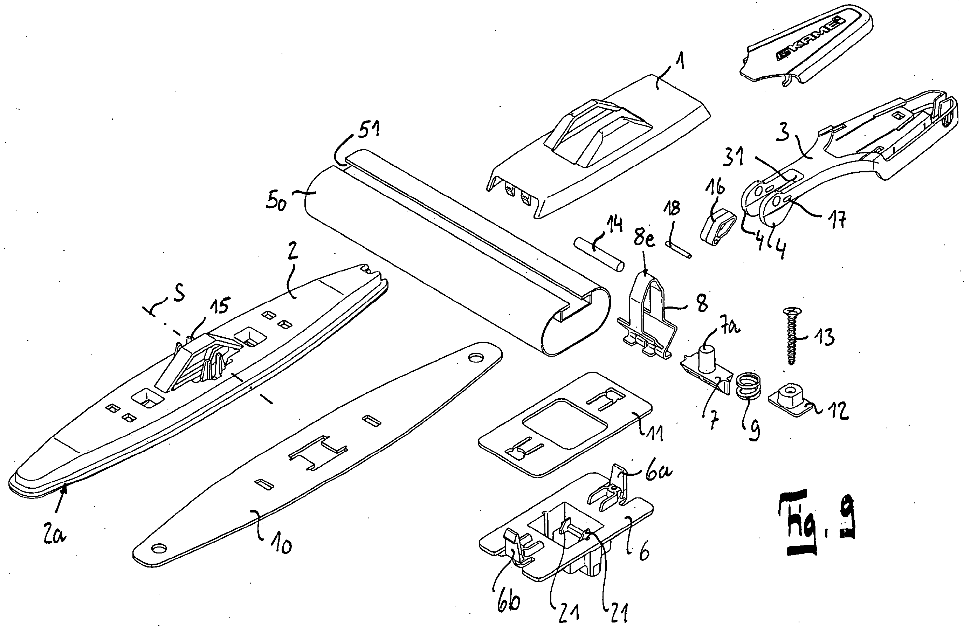

Wie Figuren 9 bis 12 zeigen, können in der Druckplatte 6 sich gegenüberliegende Stege 21 vorgesehen sein, die die Führung der Schenkel 8c, 8d der Klammer 8 übernehmen. Sie sind angeschrägt, sodass sich nach unten (entgegen Richtung V) ein sich verjüngender Spalt ergibt, der die Schenkel 8c, 8d zusammendrückt und so sicherstellt, dass die Klammer 8 geschlossen ist bzw. die Schenkel 8c, 8d sich mit ihren freien Enden 8a, 8b kreuzen, um die Einfuhr der Klammer 8 in die Rechtecknut 51 im Querträger 50 weiter zu erleichtern.

**Bezugszeichenliste**

| | | | |
|---|---|---|---|
| 1, 2 | Gehäuse | 21 | Steg |
| 2a | Druckplatte | 50 | Querträger |
| 3 | Klemmhebel | | |
| 4 | Exzenter/Exzenterscheibe | 51 | Rechtecknut |
| 6 | Druckklotz/Gehäuse/ Gehäuseteil | 52 | Hinterschneidung |
| 6a | Rastelement | 53 | Hinterschneidung |
| 6b | Rastelement | 100 | Dachbox |
| 6c | Unterseite | GS | Geschlossenstellung |
| 7 | Keil | OS | Offenstellung |
| 8 | Klammer | S | Schwenkachse |
| 8a | freies Ende | T₁ | Breite |
| 8b | freies Ende | T₂ | Breite |
| 8c | Schenkel | V | Richtung |
| 8d | Schenkel | | |
| 8e | Kopf | | |
| 9 | Druckfeder | | |
| 10 | Dichtung | | |
| 11 | Dichtung | | |
| 12 | Druckstück | | |
| 13 | Schraube | | |
| 14 | Achse | | |
| 15 | Gabel | | |
| 16 | Niederhalter | | |
| 17 | Langloch | | |
| 18 | Bolzen | | |
| 19 | Ausnehmung | | |
| 20 | Spalt | | |

## Patentansprüche

1. Vorrichtung zum Befestigen einer Dachbox (100) auf einem Querträger (50) eines Fahrzeugdaches, wobei der Querträger (50) mit einer in Richtung der Dachbox (100) offenen Rechtecknut (51) mit zwei Hinterschnitten (52, 53) versehen ist, wobei die Vorrichtung folgende Merkmale aufweist :
a) ein Gehäuse (1, 2, 6) mit einer Druckplatte (2a),
b) einen im Gehäuse (1, 2, 6) von einer Offenstellung (OS) in eine Geschlossenstellung (GS) verschwenkbar angeordneten Klemmhebel (3),
c) eine U-förmig gebogene Klammer (8) mit einem geschlossenen Kopf (8e) und zwei dem Kopf (8e) gegenüberliegenden Schenkeln (8c, 8d), deren freie Enden (8a, 8b) voneinander wegweisend abgewinkelt sind,
d) einen zwischen den Schenkeln (8c, 8d) angeordneten Keil (7) zum Aufspreizen der beiden Enden (8a, 8b) der Schenkel (8c, 8d),
wobei
e) der Klemmhebel (3) über einen Exzenter (4) so mit der Klammer (8) in Verbindung steht, dass bei einer Schwenkbewegung des Klemmhebels (3) von der Offenstellung (OS) in die Geschlossenstellung (GS) die Klammer (8) sich in Richtung des Gehäuses (1, 2) bewegt und ihre Schenkel (8c, 8d) dabei am Keil (7) aufgespreizt werden, bis deren abgewinkelte Enden (8a, 8b) mit den Hinterschnitten (52, 53) der Rechtecknut (51) klemmend in Eingriff kommen.

2. Vorrichtung nach Anspruch 1, **dadurch gekennzeichnet, dass** der Keil (7) mit einem Druckstück (12) verschraubt und zwischen dem Keil (7) und dem Druckstück (12) eine Druckfeder (9) angeordnet ist.

3. Vorrichtung nach Anspruch 1, **dadurch gekennzeichnet, dass** der Klemmhebel (3) exzentrisch im Gehäuse (2) gelagert ist.

4. Vorrichtung nach Anspruch 1, **dadurch gekennzeichnet, dass** der Keil (7) zum Ausgleich unterschiedlicher Breiten (T₁, T₂) der Rechtecknut (51) eine kurze Bewegung ausführen kann.

5. Vorrichtung nach Anspruch 1, **dadurch gekennzeichnet, dass** der Klemmhebel (3) über eine Achse (14) in zwei. Gabeln (15) am Gehäuse (2) schwenkbar gelagert ist.

6. Vorrichtung nach Anspruch 5, **dadurch gekennzeichnet, dass** die Schwenkachse (S) des Klemmhebels (3) sich bei der Schwenkbewegung des Klemmhebels (3) von der Offenstellung (OS) in die Geschlossenstellung (GS) in ihrer Lage ändert.

7. Vorrichtung nach Anspruch 1, **dadurch gekennzeichnet, dass** der Exzenter (4) durch zwei parallel beabstandete Exzenterscheiben gebildet wird.

8. Vorrichtung nach Anspruch 1, **dadurch gekennzeichnet, dass** sich die Schenkel (8c, 8d) der Klammer (8) in der Offenstellung (OS) des Klemmhebels (3) zumindest im Bereich ihrer freien Enden (8a, 8b) kreuzen.

9. Vorrichtung nach einem der vorstehenden Ansprüche, **dadurch gekennzeichnet, dass** im Gehäuse (6) zur Führung der Schenkel (8c, 8d) der Klammer (8) mindestens zwei Stege (21) vorgesehen sind.

10. Vorrichtung nach Anspruch 9, **dadurch gekennzeichnet, dass** die Stege (21) einen sich in Richtung der Unterseite (6c) des Gehäuses (6) verjüngenden Spalt ausbilden.

11. Vorrichtung nach einem der vorstehenden Ansprüche, **dadurch gekennzeichnet, dass** oberhalb der Klammer (8) ein Niederhalter (16) angeordnet ist, der in der Offenstellung (OS) des Hebels (3) ein Aufspreizen der Klammer (8) verhindert.

12. Vorrichtung nach Anspruch 11, **dadurch gekennzeichnet, dass** in der Offenstellung (OS) des Klemmhebels (3) der Niederhalter (16) auf dem Kopf (8e) der Klammer (8) aufliegt.

13. Vorrichtung nach Anspruch 12, **dadurch gekennzeichnet, dass** der Niederhalter (16) eine der Kontur des Kopfs (8e) angepasste Ausnehmung (19) aufweist.

14. Vorrichtung nach einem der Ansprüche 11 bis 13, **dadurch gekennzeichnet, dass** der Niederhalter (16) am Klemmhebel (3) angeordnet ist.

15. Vorrichtung nach Anspruch 14, **dadurch gekennzeichnet, dass** der Klemmhebel (3) ein Langloch (17) aufweist, in dem der Niederhalter (16) mittels eines Bolzens (18) geführt ist.

## Claims

1. Device, for fixing a roof box (100) on a crossmember (50) of a vehicle roof, wherein the crossmember (50) is provided with a rectangular groove (51), which is open in the direction of the roof box (100), with two undercuts (52, 53), wherein the device has the following features:
a) a housing (1, 2, 6) with a pressure plate (2a),
b) a clamping lever (3) which is arranged in the housing (1, 2, 6) so as to be pivotable from an open position (OS) into a closed position (GS),
c) a clip (8) which is bent in a U-shaped manner and has a closed head (8e) and two limbs (8c, 8d) which lie opposite the head (8e) and the free ends (8a, 8b) of which are angled pointing away from each other,
d) a wedge (7) which is arranged between the limbs (8c, 8d) for spreading the two ends (8a, 8b) of the limbs (8c, 8d),
wherein
e) the clamping lever (3) is connected to the clip (8) via an eccentric (4) in such a manner that, during a pivoting movement of the clamping lever (3) from the open position (OS) into the closed position (GS), the clip (8) moves in the direction of the housing (1, 2) and the limbs (8c, 8d) thereof are spread in the process on the wedge (7) until the angled ends (8a, 8b) of said limbs come into engagement with the undercuts (52, 53) of the rectangular groove (51) in a clamping manner.

2. Device according to Claim 1, **characterized in that** the wedge (7) is screwed to a pressure piece (12) and a compression spring (9) is arranged between the wedge (7) and the pressure piece (12).

3. Device according to Claim 1, **characterized in that** the clamping lever (3) is mounted eccentrically in the housing (2).

4. Device according to Claim 1, **characterized in that** the wedge (7) can execute a short movement in order to compensate for different widths (T₁, T₂) of the rectangular groove (51).

5. Device according to Claim 1, **characterized in that** the clamping lever (3) is mounted pivotably via a spindle (14) into two forks (15) on the housing (2).

6. Device according to Claim 5, **characterized in that** the pivot axis (S) of the clamping lever (3) changes in the position thereof during the pivoting movement of the clamping lever (3) from the open position (OS) into the closed position (GS).

7. Device according to Claim 1, **characterized in that** the eccentric (4) is formed by two eccentric discs spaced apart in parallel.

8. Device according to Claim 1, **characterized in that** the limbs (8c, 8d) of the clip (8) intersect at least in the region of the free ends (8a, 8b) thereof in the open position (OS) of the clamping lever (3).

9. Device according to one of the preceding claims, **characterized in that** at least two webs (21) are provided in the housing (6) for guiding the limbs (8c, 8d) of the clip (8).

10. Device according to Claim 9, **characterized in that** the webs (21) form a gap tapering in the direction of the lower side (6c) of the housing (6).

11. Device according to one of the preceding claims, **characterized in that** a holding-down means (16) which prevents spreading of the clip (8) in the open position (OS) of the lever (3) is arranged above the clip (8).

12. Device according to Claim 11, **characterized in that** the holding-down means (16) rests on the head (8e) of the clip (8) in the open position (OS) of the clamping lever (3).

13. Device according to Claim 12, **characterized in that** the holding-down means (16) has a recess (19) adapted to the contour of the head (8e).

14. Device according to one of Claims 11 to 13, **characterized in that** the holding-down means (16) is arranged on the clamping lever (3).

15. Device according to Claim 14, **characterized in that** the clamping lever (3) has an elongated hole (17) in which the holding-down means (16) is guided by means of a bolt (18).

## Revendications

1. Dispositif de fixation d'un coffre de toit (100) sur une traverse (50) d'un toit de véhicule, la traverse (50) étant, prévue avec une rainure rectangulaire (51), comprenant deux décrochements en contre-dépouille (52, 53), ouverte en direction du coffre de toit (100), le dispositif présentant les caractéristiques suivantes :
a) un boîtier (1, 2, 6) comprenant une plaque de compression (2a),
b) un levier de serrage (3) agencé de manière pivotante dans le boîtier (1, 2, 6) d'une position d'ouverture (OS) à une position de fermeture (GS),
c) une bride de fixation (8) courbée en forme de U comprenant une tête fermée (8e) et deux branches (8c, 8d) opposées à la tête, dont les extrémités libres (8a, 8b) sont repliées vers l'extérieur l'une par rapport à l'autre,
d) un coin (7) agencé entre les branches (8c, 8d) pour écarter les deux extrémités (8a, 8b) des branches (8c, 8d),
dispositif dans lequel
e) le levier de serrage (3) est en liaison avec la bride de fixation (8) par l'intermédiaire d'un excentrique (4) de sorte que lors d'un mouvement de pivotement du levier de serrage (3) de la position d'ouverture (OS) à la position de fermeture (GS) la bride de fixation (8) se déplace en direction du boîtier (1, 2) et ses branches (8c, 8d) sont ainsi écartées sur le coin (7), jusqu'à que les extrémités (8a, 8b) repliées viennent en prise par serrage avec les décrochements en contre-dépouille (52, 53) de la rainure rectangulaire (51).

2. Dispositif selon la revendication 1, **caractérisé en ce que** le coin (7) est vissé avec une pièce de compression (12) et un ressort de compression (9) est agencé entre le coin (7) et la pièce de compression (12).

3. Dispositif selon la revendication 1, **caractérisé en ce que** le levier de serrage (3) est supporté excentrique dans le boîtier (2).

4. Dispositif selon la revendication 1, **caractérisé en ce que** le coin (7) peut réaliser un petit mouvement pour compenser différentes largeurs (T1, T2) de la rainure rectangulaire (51).

5. Dispositif selon la revendication 1, **caractérisé en ce que** le levier de serrage (3) est monté pivotable par l'intermédiaire d'un axe (14) dans deux fourches (15) sur le boîtier (2).

6. Dispositif selon la revendication 5, **caractérisé en ce que** l'axe de pivotement (S) du levier de serrage (3) varie dans sa position lors du mouvement de pivotement du levier de serrage (3) de la position d'ouverture (OS) à la position de fermeture (GS).

7. Dispositif selon la revendication 1, **caractérisé en ce que** l'excentrique (4) est formé par deux disques excentriques espacés parallèles.

8. Dispositif selon la revendication 1, **caractérisé en ce que** dans la position d'ouverture (OS) du levier de serrage (3) les branches (8c, 8d) de la bride de fixation (8) se croisent au moins dans la zone de leurs extrémités (8a, 8b) libres.

9. Dispositif selon l'une des revendications précédentes, **caractérisé en ce qu'**au moins deux nervures (21) sont prévues dans le boîtier (6) pour guider les branches (8c, 8d) de la bride de fixation (8).

10. Dispositif selon la revendication 9, **caractérisé en ce que** les nervures (21) forment un intervalle se rétrécissant en direction du côté inférieur (6c) du boîtier (6).

11. Dispositif selon l'une des revendications précédentes, **caractérisé en ce qu'**un élément d'appui (16) est agencé au-dessus de la bride de fixation (8), ledit élément d'appui empêchant un écartement de la bride de fixation (8) dans la position d'ouverture (OS) du levier (3).

12. Dispositif selon la revendication 11, **caractérisé en ce que** l'élément d'appui (16) est appuyé sur la tête (8e) de la bride de fixation (8) dans la position d'ouverture (OS) du levier de serrage (3).

13. Dispositif selon la revendication 12, **caractérisé en ce que** l'élément d'appui (16) présente un creux (19) adapté au contour de la tête (8e).

14. Dispositif selon l'une des revendications 11 à 13, **caractérisé en ce que** l'élément d'appui (16) est agencé sur le levier de serrage (3).

15. Dispositif selon la revendication 14, **caractérisé en ce que** le levier de serrage (3) présente un trou oblong (17), dans lequel l'élément d'appui (16) est guidé au moyen d'un axe (18).
